# EUROPÄISCHE PATENTSCHRIFT

(11) **EP 0 603 474 B1**
(45) Veröffentlichungstag und Bekanntmachung des Hinweises auf die Patenterteilung: **14.01.1998**
(21) Anmeldenummer: 93114969.4
(22) Anmeldetag: 17.09.1993
(51) Int. Cl.: A01B 23/02, A01B 35/24, A01B 19/02

(54) **Zinken für einen Ackerstriegel**
Tines for harrow
Dents pour herse

(30) Priorität: 22.12.1992 DE 9217506 U
(43) Veröffentlichungstag der Anmeldung: 29.06.1994
(73) Patentinhaber: Rabewerk GmbH + Co., 49152 Bad Essen (DE)
(72) Erfinder: Bohnenkamp, Wilfried, Dipl.-Ing., D-49152 Bad Essen (DE)
(74) Vertreter: Missling, Arne, Dipl.-Ing.

(56) Entgegenhaltungen:
- CH-A- 670 029
- FR-A- 578 369
- US-A- 3 016 958
- US-A- 4 423 787

## Beschreibung

Die Erfindung bezieht sich auf einen Ackerstriegel mit Zinken, wobei jeder Zinken aus einem drahtartigen, elastischen Material gefertigt ist, welches am oberen Bereich des Zinkens in Form von horizontal angeordneten, schraubenfederartigen, aneinanderliegenden Windungen ausgebildet ist, welche am Ackerstriegel gelagert sind, wobei zumindest ein Stützelement vorgesehen ist, welches zumindest im Bereich einer Stirnseite der Windungen an diesen anliegt

Ein derartiger Ackerstriegel ist aus der US-A-4,423,787 bekannt.

Ackerstriegel der vorgenannten Art werden verwendet, um auf bestellten Feldern Unkraut zu bekämpfen. Sie können ganzflächig eingesetzt werden, wenn die jungen Nutz- oder Kulturpflanzen bereits ein entsprechend kräftiges Wurzelwerk entwickelt haben. Üblicherweise ist das Wurzelwerk des Unkrauts schwächer, so daß dieses durch die Zinken ausgerissen wird. Die Zinken müssen elastisch ausgebildet sein, um den Kulturpflanzen ausweichen zu können, sie müssen jedoch in der Lage sein, eine entsprechende Kraft zur Bekämpfung des Unkrauts aufzubringen. Diese Ausweichbewegung der Zinken setzt eine nach hinten (bezogen auf die Fahrtrichtung) gerichtete Beweglichkeit der Zinken voraus. Zusätzlich muß eine gewisse seitliche Bewegung möglich sein, um Bodenhindernissen, wie beispielsweise Steinen, oder auch Pflanzen ausweichen zu können.

Der Stand der Technik zeigt vielfältige Ausgestaltungsformen von Ackerstriegeln. Die DE-OS 14 07 718 zeigt Zinken, die in eine horizontal angeordnete, schraubenfederartige Windungsanordnung übergehen. Die Windungen ermöglichen somit eine Bewegung der Zinken nach hinten, während gleichzeitig, durch entsprechende Verkippung der einzelnen Windungen zueinander, eine seitliche Bewegbarkeit möglich ist. Ein ähnliches Prinzip zeigt die DE-AS 12 87 346. Auch die aus der DE-OS 11 98 101 bekannte Zinkenausgestaltung ist nach diesem Grundprinzip aufgebaut. Als nachteilig erweist es sich dabei, daß die seitliche Beweglichkeit der Zinken sehr groß sein kann, so daß, beispielsweise bei verhärteten Stellen im Boden benachbarte Zinken zu entgegengesetzten Seiten ausweichen können, so daß ein größerer Bodenbereich nicht bearbeitet wird. Dieser Nachteil ergibt sich auch bei der Egge gemäß der AT-PS 251 329. Dort sind die Zinken an vertikal angeordneten Windungen gelagert, so daß sich eine freie Verschwenkbarkeit in beliebige Richtungen ergibt. Die US-A-4,423,787 zeigt eine Lösung mit einem seitlichen Anschlag, einem Stützelement, das die setiliche Beweglichkeit beschränkt. Eine andere Lösung zeigt die DE-OS 15 57 819. Dort sind die Zinken mittels eines Scharniermechanismus um eine horizontale Achse schwenkbar gelagert. Diese Ausgestaltungsform erfüllt jedoch nicht alle Anforderungen, sie ist insbesondere aufwendig und kompliziert in ihrem Aufbau. Allen bekannten Lösungen liegt jedoch der Nachteil zugrunde, daß einzelne Zinken nicht beliebig inaktiviert werden können, um die Zinkenabstände unterschiedlichen Arbeitsbedingungen anzupassen.

Der Erfindung liegt die Aufgabe zugrunde, einen Zinken für einen Ackerstriegel zu schaffen, welcher bei einfachem Aufbau und einfacher, betriebssicherer Anwendbarkeit eine begrenzte seitliche Beweglichkeit aufweist, und welcher kostengünstig und einfach herstellbar ist.

Erfindungsgemäß wird die Aufgabe dadurch gelöst, daß die Windungen und das Stützelement an einem Tragbalken des Ackerstriegels gelagert sind und daß das Stützelement Mittel zum Einhängen des Zinkens umfaßt.

Der erfindungsgemäße Zinken zeichnet sich durch eine Reihe erheblicher Vorteile aus. Durch das Stützelement wird die Beweglichkeit des Aufhängungsbereichs des Zinken eingeschränkt. Dies bedeutet, daß eine gegenseitige Verkippung der Windungen verhindert oder weitgehend unterbunden wird. Es bleibt somit eine ausreichende seitliche Bewegung des Zinkens, welche sich aus der Elastizität des Zinkens selbst ergibt, so daß dieser Bodenhindernissen oder ähnlichem in ausreichender Weise ausweichen kann.

Das Stützelement bewirkt auch eine Verringerung der Schwingungen, insbesondere der seitlichen Schwingungen der Zinken, wodurch sich die Qualität der Bodenbearbeitung verbessert.

Durch die weitere Ausbildung des Stützelementes mit Mitteln zum Einhängen des Zinkens ist es möglich, die Anzahl der Zinken sowie die einzelnen Zinkenabstände vorzugeben. Für bestimmte Pflanzenarten und bei bestimmten Wuchsstadien kann es günstig sein, sowohl den Zinkenabstand als auch die Zinkenzahl anzupassen, beispielsweise den Abstand auf das Doppelte zu vergrößern. Hierbei wird jeder zweite Zinken dadurch ausgeschaltet, daß er eingehängt, d.h. hochgehängt wird.

Erfindungsgemäß kann das Stützelement entweder als separates Bauteil ausgebildet sein, welches auf den Zinken, bzw. auf die Windungen aufgesetzt wird, es ist jedoch auch möglich, das Stützelement einstückig mit dem Zinken auszubilden, beispielsweise durch die Verlängerung einer Befestigungsschlaufe oder eines Befestigungsbügels des Zinken-Materials.

Das Stützelement weist bevorzugterweise einen ersten Schenkel auf, welcher sich im wesentlichen über die gesamte Höhe der Windungen erstreckt. Der erste Schenkel kann, in Fahrtrichtung gesehen, am vorderen Bereich, mittig, oder am hinteren Bereich der Windungen angeordnet sein. Die unterschiedlichen Ausgestaltungsformen ergeben sich auch aus der Art der Anbringung des Zinkens an dem Tragbalken.

Günstig ist es weiterhin, wenn das Stützelement einen zweiten Schenkel aufweist, welcher dem ersten Schenkel gegenüberliegend angeordnet ist. Es ergibt sich somit ein u-förmiges Profil, in welches die Windungen gehaltert sind. Hierdurch läßt sich die seitliche Bewegbarkeit des Zinkens präzise vorbestimmen.

Da es bei Pflanzen in Reihenkulturen vorkommen kann, daß die Pflanzen bei einer bestimmen Pflanzenart oder einem bestimmten Wuchsstadium sehr empfindlich sind, kann es günstig sein, die Zinken im Bereich der Pflanzenreihen auszuschalten. Es ist aus dem Stand der Technik bekannt, die Zinken nach oben zu klappen und zu verriegeln. Erfindungsgemäß ist hierfür in bevorzugter Weiterbildung vorgesehen, daß der erste Schenkel an seinem freien Ende mit einem Haken versehen ist, in welchen ein benachbarter Zinken eingehängt werden kann. Es kann somit auf zusätzliche Maßnahmen zum Hochklappen und Halten des Zinken verzichtet werden. Um auch den, in Fahrtrichtung gesehen, letzten oder hinteren Zinken einer Zinkenreihe hochklappen zu können, kann es günstig sein, ein zusätzliches Hakenelement vorzusehen.

Erfindungsgemäß ist somit die Möglichkeit geschaffen, die Zinken entweder einzeln hochzuhängen, um die Zahl der Zinken, welche sich jeweils im Einsatz befinden, anpassen zu können, oder die Tragbalken um ihre Längsachse zu drehen, so daß einige Zinken der Tragbalken vom Boden abgehoben und damit außer Betrieb gesetzt sind. Weiterhin besteht erfindungsgemäß die Möglichkeit, alle Tragbalken kippbar zu lagern, so daß der Anstellwinkel der Zinken verändert werden kann, wodurch sich unterschiedliche Bearbeitungskräfte ergeben. Somit kann, beispielsweise über eine Zentralverstellung, die Zinkenkraft so eingestellt werden, daß sie dem Wachstumszustand der Nutzpflanzen angepaßt werden kann.

Im folgenden wird die Erfindung anhand von Ausführungsbeispielen in Verbindung mit der Zeichnung beschrieben. Dabei zeigt:
- Fig. 1a bis 1d: jeweils eine stirnseitige Ansicht, von hinten gesehen, unterschiedlicher Ausführungsbeispiele des Zinken unter Verwendung eines separaten Stützelements,
- Fig. 2: eine Seitenansicht von Ausführungsbeispielen ähnlich den in Fig. 1 a bis 1 c gezeigten Ausführungsbeispielen,
- Fig. 3: eine Seitenansicht, ähnlich Fig. 2, einer weiteren Ausführungsvariante, ähnlich der in Fig. 2 gezeigten Ausführungsform,
- Fig. 4: eine stirnseitige Ansicht, von hinten, eines weiteren Ausführungsbeispiels der Erfindung,
- Fig. 5: eine Seitenansicht des in Fig. 4 gezeigten Ausführungsbeispiels, und
- Fig. 6: eine Seitenansicht eines weiteren Ausführungsbeispiels, ähnlich der Darstellung der Fig. 2 und 3, wobei eine zusätzliche Verstellmöglichkeit der Zinken geschaffen ist.

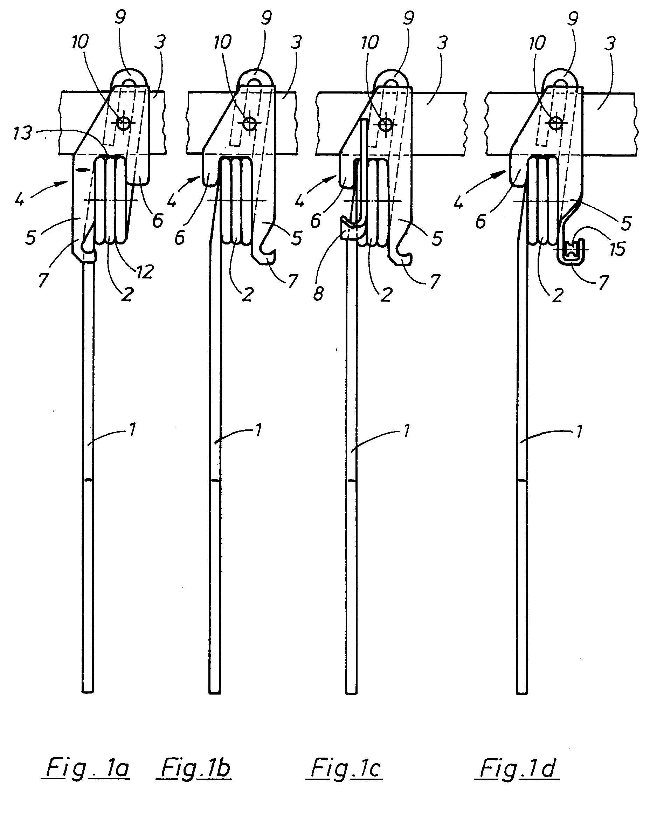

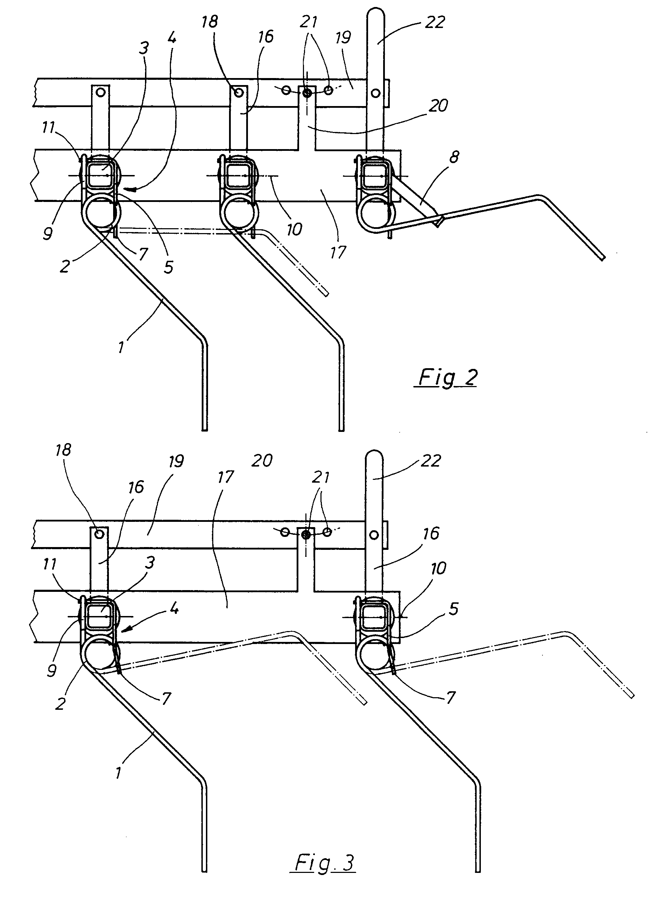

Die Figuren 1 a bis 1 d zeigen jeweils stirnseitige Ansichten ähnlicher Ausführungsbeispiele des Zinken. Der Zinken 1 ist aus einem Drahtmaterial gefertigt und an seinem unteren Ende bevorzugt so abgewinkelt, daß er in der Arbeitsstellung im wesentlichen vertikal ausgerichtet ist (sh. die Seitenansichten der Fig. 2 und 3). Am oberen Aufhängungsbereich des Zinken sind schraubenfederartige, aneinanderliegende Windungen ausgebildet, welche horizontal ausgerichtet sind. An die Windungen schließt sich ein Bügel 9 an, welcher die Befestigung des Zinken an einem vertikalen Tragbalken 3 mittels einer nur schematisch gezeigten Schraube 10 ermöglicht. Der Tragbalken kann beispielsweise als Vierkantrohr ausgebildet sein. Erfindungsgemäß ist auf der dem Bügel 9 gegenüberliegenden Seite des Tragbalkens 3 ein Stützelement 4 angeordnet, welches einen längeren, ersten Schenkel 5 und einen kürzeren, zweiten Schenkel 6 aufweist. Die beiden Schenkel liegen jeweils seitlich gegen die Windungen 2 an, wobei der erste Schenkel 5 sich im wesentlichen über die gesamte Höhe der Windungen erstreckt, während der zweite Schenkel 6 nur den oberen Bereich der Windungen abstützt. Die Befestigung des Stützelements 4 erfolgt ebenfalls über die bereits erwähnte Schraube 10.

Der obere Bereich des Stützelements 4 ist nach vorne abgewinkelt (s. Fig. 2 und 3) und weist eine Nase 11 auf, welche sich durch den Bügel 9 erstreckt. Dieser wird somit gegen ein seitliches Verkippen gesichert, da der obere Bereich des Stützelements 4 auf der Oberfläche des vierkantigen Tragbalkens 3 aufliegt.

Im folgenden wird die Wirkungsweise des in den Fig. 1 bis 3 gezeigten Stützelements beschrieben: wäre das Stützelement 4 nicht vorhanden, so würde, bezogen auf die Darstellungen der Fig. 1 a bis 1 c eine nach links gerichtete, auf den Zinken 1 aufgebrachte Kraft dazu führen, daß sich die Windungen an einem unteren Bereich 12 voneinander trennen, in gleicher Weise erfolgt eine, wenn auch schwächere, Beabstandung der Windungen an einem oberen Bereich 13. Somit bewirkt eine nach links gerichtete Kraft eine Trennung der einzelnen Windungen. Bei einer nach rechts gerichteten Kraft stützen sich die Windungen im unteren Bereich 12 gegeneinander ab, während sie sich im oberen Bereich 13 voneinander entfernen. Daraus ergibt sich, daß bei einer nach links gerichteten Kraft die Zinken somit weicher gelagert sind, als bei einer nach rechts gerichteten Kraft. Durch die erfindungsgemäße Ausgestaltung des Stützelements werden die einzelnen Windungen 2 zusammengehalten, so daß die Windungen 2 keine oder nur stark verminderte seitliche Beweglichkeit des Zinken 1 zulassen.

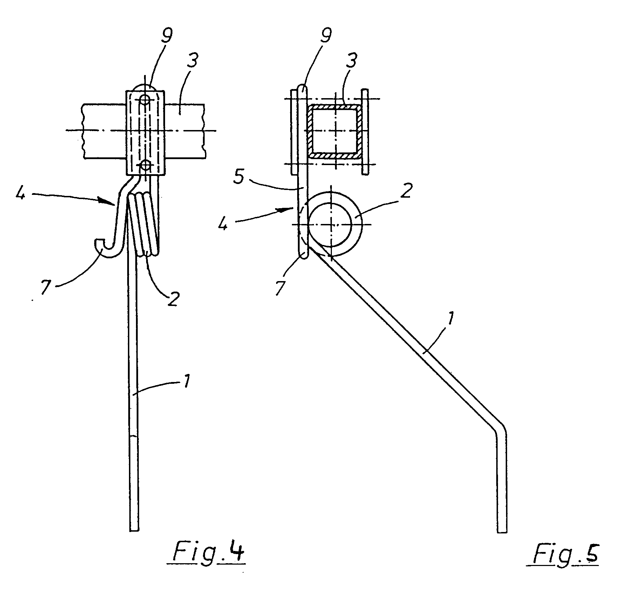

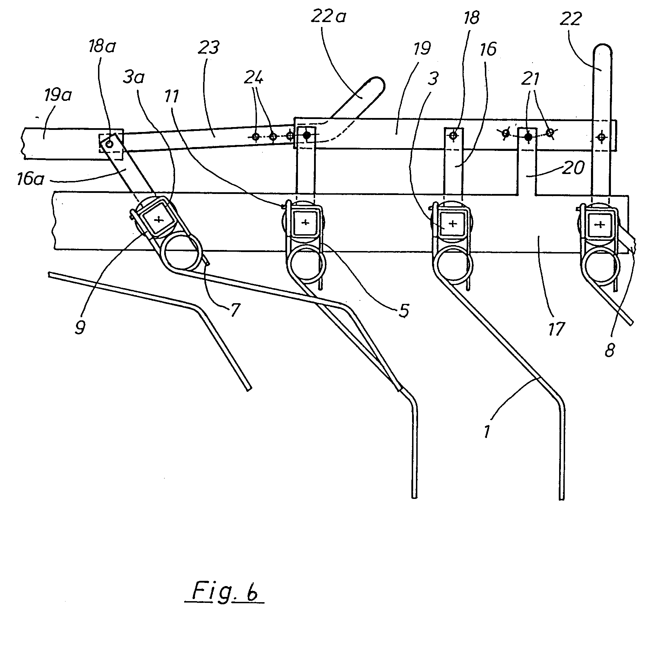

Die Fig. 4 und 5 zeigen ein weiteres Ausführungsbeispiel, bei welchem das Stützelement 4 einstückig mit dem Material des Bügels 9 ausgebildet ist. Der Bügel 9 ist somit verlängert, um den ersten Schenkel 5 zu bilden. Auf einen zweiten Schenkel wurde hierbei verzichtet. Die Befestigung an einem viereckigen Tragbalken 3 erfolgt mittels zweier Schrauben und entsprechender Druckplatten. Zusätzlich ist am Ende des ersten Schenkels 5 ein Haken 7 ausgebildet, in welchen, wie auch in den Fig. 2 und 3 gezeigt, jeweils ein vorauslaufender Zinken 1 eingehängt werden kann. Somit ist es möglich, bestimmte Zinken hochzustellen.

Wie in den Fig. 2, 3 und 6 dargestellt, sind die einzelnen Tragbalken 3 jeweils endseitig an einem Längsträger 17 so gelagert, daß die Tragbalken 3 um ihre Längsachse verdrehbar sind. Die einzelnen Tragbalken 3 sind jeweils fest mit einer Lasche 16 verbunden, welche über ein Gelenk 18 verschwenkbar an einem Längsholm 19 gelagert sind. Ein fest mit dem Längsträger 17 verbundener Holm 20 ist wahlweise in eine von mehreren Ausnehmungen 21 einhängbar oder mit diesen verschraubbar. Hierdurch ergibt sich die Möglichkeit, mittels eines Handhebels 22 die Neigung der einzelnen Tragbalken 3 einzustellen, um auf diese Weise den Anstellwinkel der Zinken 1 zu verändern. Die Fig. 6 zeigt eine Ausgestaltungsvariante, bei welcher der Längsholm 19 über die Laschen 16 nur mit einer vorgegebenen Anzahl von Tragbalken 3 in Verbindung steht, während die restlichen Tragbalken 3a an einem zweiten Längsholm 19a gelagert sind, welcher über eine Strebe 23 mittels eines Handhebels 22a relativ zu dem Längsholm 19 verstellbar ist. Hierzu weist die Strebe 23 mehrere Ausnehmungen 24 auf, welche über einen Bolzen wahlweise mit Ende des Längsholms 19 zu verbinden sind. Auf diese Weise ist es möglich, die an dem Tragbalken 3a gelagerten Zinken 1 außer Betrieb zu setzen und somit die Zahl der Zinken eines Zinkenfeldes zu minimieren, beispielsweise zu halbieren.

Die in Fig. 1 d gezeigte Lösung mit der reibungsmindernden Rolle 15 vermindert die Reibung beim Einstellen der Neigung der Zinken bei hochgehängten Zinken 1 und schafft somit die Möglichkeit, unter Aufwand geringerer Kräfte die gewünschte Einstellung vorzunehmen. Weiterhin ist durch den Haken 7 gewährleistet, daß auch bei nur geringfügiger Verstellung des Anstellwinkels des Zinkens die nicht in Betrieb befindlichen Zinken sicher hochgehängt und damit vom Bearbeitungsbereich getrennt werden können.

Die Ausführungsbeispiele der Fig. 1 bis 3 zeigen ebenfalls Haken 7, welche am unteren Endbereich des ersten Schenkels 5 ausgebildet sind. Zusätzlich ist in den Fig. 1 c und 2 ein zusätzliches Hakenelement 8 gezeigt, welches dazu dient, den jeweils letzten Zinken hochzuklappen.

Die Fig. 1 d zeigt ein Ausführungsbeispiel, bei welchem an dem Haken 7 eine Rolle 15 drehbar gelagert ist.

Diese vermindert die Reibung einem hochgestellten Zinken 1, so daß, wie an anderer Stelle beschrieben, eine einfachere Verstellung der Zinkenabstände erfolgen kann.

## Patentansprüche

1. Ackerstriegel mit Zinken, wobei jeder Zinken (1) aus einem drahtartigen, elastischen Material gefertigt ist, welches am oberen Bereich des Zinkens (1) in Form von horizontal angeordneten, schraubenfederartigen, aneinanderliegenden Windungen (2) ausgebildet ist, welche am Ackerstriegel gelagert sind, wobei zumindest ein Stützelement (4) vorgesehen ist, welches zumindest im Bereich einer Stirnseite der Windungen (2) an diesen anliegt, dadurch gekennzeichnet, daß die Windungen (2) und das Stützelement (4) an einem Tragbalken (3) des Ackerstriegels gelagert sind und daß das Stützelement (4) Mittel zum Einhängen des Zinkens (1) umfaßt.

2. Zinken nach Anspruch 1, dadurch gekennzeichnet, daß das Stützelement (4) als separates Bauteil ausgebildet ist.

3. Zinken nach Anspruch 1, dadurch gekennzeichnet, daß das Stützelement (4) einstückig mit dem Zinken ausgebildet ist.

4. Zinken nach einem der Ansprüche 1 bis 3, dadurch gekennzeichnet, daß das Stützelement (4) einen ersten Schenkel (5) aufweist, welcher sich im wesentlichen über die gesamte Höhe der Windungen (2) erstreckt.

5. Zinken nach einem der Ansprüche 1 bis 4, dadurch gekennzeichnet, daß das Stützelement (4) einen zweiten Schenkel (6) aufweist, welcher dem ersten Schenkel (5) gegenüberliegend angeordnet ist und sich nur über einen Teil der Höhe der Windungen (2) erstreckt.

6. Zinken nach Anspruch 4 oder 5, dadurch gekennzeichnet, daß der erste Schenkel (5) an seinem freien Ende mit einem Haken (7) zum Einhängen eines Zinkens (1) versehen ist.

7. Zinken nach einem der Ansprüche 1 bis 6, dadurch gekennzeichnet, daß im Bereich des Stützelements (4) ein zusätzliches Hakenelement (8) zum Einhängen des Zinkens (1) an dem Tragbalken (3) befestigt ist.

8. Zinken nach einem der Ansprüche 4 bis 7, dadurch gekennzeichnet, daß der ersten Schenkel (5) an der gleichen Seite der Windungen (2) wie der Zinken (1) angeordnet ist.

9. Zinken nach einem der Ansprüche 1 bis 4, dadurch gekennzeichnet, daß der ersten Schenkel (5) an der dem Zinken (1) gegenüberliegenden Seite der Windungen (2) angeordnet ist.

10. Zinken nach einem der Ansprüche 1 bis 9, dadurch gekennzeichnet, daß die Windungen (2) lageveränderbar oder einstellbar an dem Tragbalken (3) gelagert sind.

11. Zinken nach Anspruch 10, dadurch gekennzeichnet, daß der Haken (7) und/oder das Hakenelement (8) eine reibungsmindernde Rolle (15) aufweist, auf welche der Zinken (1) auflegbar ist.

12. Zinken nach einem der Ansprüche 1 bis 11, dadurch gekennzeichnet, daß mehrere Tragbalken (3) vorgesehen sind, welche zur Bildung eines Zinkenfelds parallel zueinander angeordnet sind und daß zumindest ein Tragbalken (3a) um seine Längsachse drehbar gelagert ist.

13. Zinken nach Anspruch 12, dadurch gekennzeichnet, daß die Hälfte der Zahl der Tragbalken (3) drehbar ist.

14. Zinken nach einem der Ansprüche 1 bis 13, dadurch gekennzeichnet, daß jeder Tragbalken (3) zur Einstellung des Anstellwinkels des Zinkens (1) um seine Längsachse kippbar gelagert ist.

15. Zinken nach einem der Ansprüche 1 bis 14, dadurch gekennzeichnet, daß am Ende des ersten Schenkels (5) ein Haken (7) ausgebildet ist, in welchem ein vorauslaufender Zinken (1) einhängbar ist.

## Claims

1. A harrow having tines, each tine (1) being manufactured from a wire-like, resilient material which at the upper region of the tine (1) is in the form of horizontally-arranged, helical-spring-like, juxtaposed turns (2) mounted on the harrow, at least one support member (4) being provided which contacts the turns (2) at least in the region of one end face thereof, characterised in that the turns (2) and the support member (4) are mounted on a supporting beam (3) of the harrow, and in that the support member (4) comprises means for suspending the tine (1).

2. A tine in accordance with Claim 1, characterised in that the support member (4) is a separate component part.

3. A tine in accordance with Claim 1, characterised in that the support member (4) is integral with the tine.

4. A tine in accordance with any one of Claims 1 to 3, characterised in that the support member (4) has a first arm (5) extending over substantially the entire height of the turns (2).

5. A tine in accordance with any one of Claims 1 to 4, characterised in that the support member (4) has a second arm (6) which is arranged facing the first arm (5) and only extends over part of the height of the turns (2).

6. A tine in accordance with Claim 4 or 5, characterised in that the free end of the first arm (5) is provided with a hook (7) for suspending a tine (1).

7. A tine in accordance with any one of Claims 1 to 6, characterised in that in the region of the support member (4), an additional hook element (8) for suspending the tine (1) is secured to the supporting beam (3).

8. A tine in accordance with any one of Claims 4 to 7, characterised in that the first arm (5) is arranged at the same side of the turns (2) as the tine (1).

9. A tine in accordance with any one of Claims 1 to 4, characterised in that the first arm (5) is arranged at that side of the turns (2) which is opposite the tine (1).

10. A tine in accordance with any one of Claims 1 to 9, characterised in that the turns (2) are mounted on the supporting beam (3) so as to be adjustable or alterable in position.

11. A tine in accordance with Claim 10, characterised in that the hook (7) and/or the hook element (8) has/have a friction-reducing roller (15) on which the tine (1) can be placed.

12. A tine in accordance with any one of Claims 1 to 11, characterised in that a plurality of supporting beams (3) are provided, these being arranged parallel to one another to form a tine zone, and in that at least one supporting beam (3a) is mounted so as to be rotatable about its longitudinal axis.

13. A tine in accordance with Claim 12, characterised in that half of the supporting beams (3) are rotatable.

14. A tine in accordance with any one of Claims 1 to 13, characterised in that each supporting beam (3) is mounted so as to be tiltable about its longitudinal axis for adjustment of the setting angle of the tine (1).

15. A tine in accordance with any one of Claims 1 to 14, characterised in that at the end of the first arm (5) there is a hook (7) in which a leading tine (1) can be suspended.

## Revendications

1. Scarificateur agricole à dents, chaque dent (1) étant constituée d'un matériau élastique en forme de fil, réalisé, dans la zone supérieure de la dent (1), sous forme de spires (2) placées les unes contre les autres, disposées horizontalement, à la façon de ressorts hélicoïdaux, qui sont montées sur le scarificateur, tandis qu'il est prévu au moins un organe support (4) qui, au moins dans la zone d'une face frontale des spires (2), est placé contre celles-ci, caractérisé en ce que les spires (2) et l'organe support (4) sont montés sur une entretoise support (3) du scarificateur, et en ce que l'organe support (4) comporte des moyens pour l'accrochage de la dent (1).

2. Scarificateur agricole suivant la revendication 1, caractérisé en ce que l'organe support (4) est réalisé sous la forme d'une pièce séparée.

3. Scarificateur agricole suivant la revendication 1, caractérisé en ce que l'organe support (4) est réalisé en formant une seule pièce avec la dent.

4. Scarificateur agricole suivant l'une des revendications 1 à 3, caractérisé en ce que l'organe support (4) présente une première branche (5) s'étendant essentiellement sur toute la hauteur des spires (2).

5. Dent suivant l'une des revendications 1 à 4, caractérisée en ce que l'organe support (4) présente une deuxième branche (6) disposée du côté opposé à la première branche (5) et s'étendant seulement sur une partie de la hauteur des spires (2).

6. Dent suivant la revendication 4 ou 5, caractérisée en ce que la première branche (5), à son extrémité libre, est équipée d'un crochet (7) pour suspendre une dent (1).

7. Dent suivant l'une des revendications 1 à 6, caractérisée en ce qu'un élément de crochet (8) supplémentaire est fixé, dans la zone de l'organe support (4), pour accrocher la dent(1) à l'entretoise support (3).

8. Dent suivant l'une des revendications 4 à 7, caractérisée en ce que la première branche (5) est disposée du même côté des spires (2) que la dent (1).

9. Dent suivant l'une des revendications 1 à 4, caractérisée en ce que la première branche (5) est disposée du coté des spires (2) opposé à la dent (1).

10. Dent suivant l'une des revendications 1 à 9, caractérisée en ce que les spires (2) sont montées avec possibilité de changer leur position ou leur réglage sur l'entretoise support (3).

11. Dent suivant la revendication 10, caractérisée en ce que le crochet (7) et/ou l'élément de crochet (8) présente un galet (15) réduisant les frottements, sur lequel peut être posée la dent (1).

12. Dent suivant l'une des revendications 1 à 11, caractérisée en ce que sont prévues plusieurs entretoises supports (3) qui sont installées parallèlement les unes aux autres pour former un tapis de dents, et en ce qu'au moins une entretoise support (3a) est montée pivotante autour de son axe longitudinal.

13. Dent suivant la revendication 12, caractérisée en ce que la moitié du nombre des entretoises supports (3) peut pivoter.

14. Dent suivant l'une des revendications 1 à 13, caractérisée en ce que chaque entretoise support (3) est, pour le réglage de l'angle d'attaque de la dent (1), montée de façon à pouvoir basculer autour de son axe longitudinal.

15. Dent suivant l'une des revendications 1 à 14, caractérisée en ce qu'à l'extrémité de la première branche (5), est réalisé un crochet (7) dans lequel peut être suspendue une dent (1) qui précède.
